# EUROPEAN PATENT APPLICATION

(11) **EP 1 317 108 A1**
(43) Date of publication of application: **04.06.2003**
(21) Application number: 01128327.2
(22) Date of filing: 29.11.2001
(51) Int. Cl.: H04L 29/06, H04L 12/64, H04Q 7/24

(54) **Call control network, access control server and call control method**

(71) Applicant: TELEFONAKTIEBOLAGET LM ERICSSON, 126 25 Stockholm (SE)
(72) Inventor: Hameleers, Heino, 6471VN Kerkrade (NL); Hundscheidt, Frank, 6464GC Kerkrade (NL)
(74) Representative: HOFFMANN - EITLE

(57) **Abstract**

A call control network for controlling calls in a mobile communication network (30) is described. The mobile communication network comprises at least one circuit switching access network (33) that supports circuit switched communications. A call control system (23) for providing call related functions for packet switched communications, arranged to send and receive call control information in accordance with a first call control protocol (SIP) for packet switched communication and to identify resources with network identifiers (URI) of a predetermined syntax, is provided. An access control system (22) is provided which terminates said first call control protocol (SIP) and said second call control protocol (RANAP/BSSAP), and which has interworking functions, such that at least a part of said call related functions provided by said call control system (23) can also be applied to circuit switched communications, and where at least one of said interworking functions comprises a procedure for generating a network identifier (URI) of said predetermined syntax for a mobile station accessing via said second access control system (22), said procedure being arranged to generate said network identifier (URI) on the basis of a call destination identifier of said mobile station.

## Description

### [Field of the Invention]

The present invention relates to a call control network for providing call related functions to communications to and from a mobile communication network comprising a plurality of access networks. The present invention also relates to an access control server in such a call control network, and to a call control method.

### [Background of the invention]

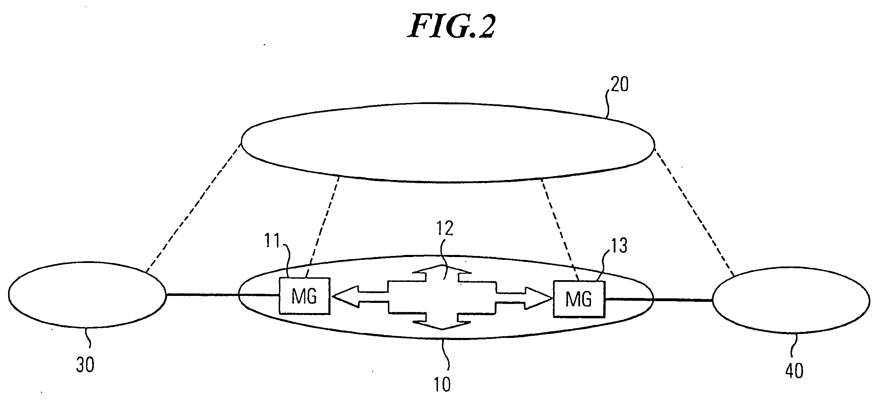

Fig. 2 shows a schematic structure of a system for interconnecting two communication networks 30 and 40. The interconnection is handled by a connectivity layer 10 and a control layer 20. The connectivity layer 10 has so-called media gateways (MG) 11 and 13 that handle the conversion of call content or payload for calls between the communication networks 30 and 40. The media gateways 11 and 13 in the connectivity layer 10 handle data on the basis of an appropriate transport scheme, which can be STM based (Synchronous Transfer Mode), ATM based (Asynchronous Transfer Mode) or IP based (Internet Protocol), to name a few examples. The control layer 20 provides call related functions such as actual call control functions (e.g. session management, billing, etc.), as well as network service functions (e.g. intelligent network services) and other network application functions.

Traditionally, communications in telephone networks are circuit switched. Circuit switching is a technique in which a call connection between two terminating equipments corresponds to the allocation of a prescribed set of physical facilities that provide a transmission path of a certain bandwidth or transmission capacity. These facilities are dedicated to the users (terminating equipments) for the duration of the call. The concept of circuit switching is well known in the art and need not be described in further detail.

Traditional mobile communication systems (such as GSM) also employ circuit switching. However, in recent years developments have been undertaken to introduce so-called packet switching for communication networks, especially for mobile communication networks. Packet switching means that the communication system transports information among users by transmitting sequences of packets, each comprising part of the information. If the information does not fit into a single packet, the sending terminal equipment partitions the information into a sequence of packets, the sequence is transported across the network and the receiving terminal equipment reassembles the packets into messages.

The advantage of packet switching over circuit switching is that physical facilities do not need to be dedicated for the users of a given communication for the duration of that communication, such that a more efficient use of the network is enabled. Namely, in circuit switching the physical facilities (e.g. a predetermined amount of bandwidth on a trunk) are reserved for the specific circuit switched connection, even if the users of the associated communication are not exchanging information. In packet switched communication, transmission facilities are only used on demand, i.e. if there is information to be transported. As bandwidth is a very important resource in mobile communication systems, the more efficient use of bandwidth by using packet switching is of great importance.

Consequently, the future mobile communication systems will employ packet switching. An example of this is the General Packet Radio Service (GPRS).

A problem with the new development of mobile communication systems is the compatibility with circuit switched techniques. Namely, it is desirable that a given mobile communication system supports both circuit switched communications and packet switched communications. This effectively means that a mobile communication system comprises a plurality of so-called access networks, where some of these access networks are based on packet switching and others on circuit switching. This, however, leads to a complicated structure of the call control layer, because calls to and from mobile stations operating in the various access networks must be appropriately handled.

With respect to the general introduction of packet-switching networks (e.g. IP networks) in combination with traditional telephone systems (e.g. PSTNs), it has been proposed to introduce rules for transforming telephone numbers adhering to the international public telecommunication numbering plan (ITU-T Recommendation E.164), so-called E.164 numbers, into Domain Name System (DNS) names, see e.g. RfC 2916 of September 2000. In accordance with RfC 2916, an Internet usable DNS name is derived from an E.164 number by first removing all non-digit characters from the E.164 number, then placing dots (".") between each digit, reversing the order of the digits and finally adding the root domain ".e164.arpa".

This concept of translating E.164 numbers into DNS names is used in a system referred to as Enum. The basic idea behind Enum is that a user of a telephone or Internet computer can enter or dial the E.164 number of the destination that he or she wishes to contact, where an IP network between the user and desired destination can translate the dialled E.164 number into a DNS name, which is used as a pointer to a database that stores associated information or service records for routing purposes and possibly service priority purposes.

The DNS name that results from the above described transformation is an example of a Uniform Resource Identifier (URI) as defined in RfC 2396 (August 1998), which is herewith incorporated by reference. A Uniform Resource Identifier is a compact sequence of characters or symbols for identifying an abstract or physical resource, the sequence having a defined, uniform syntax. A resource is anything that has identity. Examples include an electronic document, an image, a service, or also groups of resources. Equally, entities can be considered as resources, such as network entities (terminals, nodes, servers, etc.), but also entities outside of any network, such as human beings. An identifier is an object that can act as a reference to something that has identity, e.g. a sequence of characters. The terms resource and identifier shall be used in the above defined way throughout the entire specification and claims.

The basic architecture shown in Figures 1 to 4 of the present application is also shown in older European patent application 00112029.4 of the same applicant, which was filed on June 2, 2000.

### [Object of the present invention]

The object of the present invention is to provide an efficient call control network for controlling calls in a mobile communication network, where said mobile communication network comprises at least one circuit switching access network and at least one packet switching access network.

### [Summary of the Invention]

This object is solved by the subject-matter described in the independent claims. Advantageous embodiments are described in the dependent claims.

According to the present invention an access control system and an access control server for circuit switched communications are provided, providing interworking functions between circuit switching access networks on the one hand and a call control system or call control function on the other hand, where said call control system is arranged to provide call related functions for packet switched communications. This is done by letting the access control system or server communicate with the call control system on the basis of a call control protocol for controlling packet switched communications, where the access control server terminates said protocol. The call control system uses network identifiers of a predetermined syntax. On the other hand, the access control system or access control server communicates with the circuit switching access network with a second call control protocol for controlling circuit switched communications.

Especially, at least one of the interworking functions comprises a procedure for generating a network identifier of the predetermined syntax for a mobile station accessing via said circuit switching access network, where the procedure is arranged to generate the network identifier on the basis of a call destination identifier of the accessing mobile station. A call destination identifier is any suitable identifier associated with a given mobile terminal that is used by other terminals in the same or other communication networks for establishing a communication with the given mobile terminal. For example, the call destination identifier can be the telephone number assigned to the mobile station. Therefore, an example of the above feature is if the E.164 number associated with an accessing circuit-switched mobile station is transformed into a URI having the syntax defined by RfC 2396, where this URI is then used to identify this mobile station within the framework of the packet-switching control system.

In general terms, a network identifier for use by the packet-switching call control system is generated on the basis of a call destination identifier of the circuit-switching mobile station. For example, when such a mobile station contacts the access network, the interworking function identifies the calling party number and generates a network identifier for the packet-switched network on the basis thereof. This is quite distinct from the known concepts, such as Enum or RfC 2916, as the known concepts always transform the called party number, not the calling party number.

As a result of the concept of the invention, the circuit switched mobile station is identifiable within the packet-switched system, such that appropriate control functions implemented in the packet-switching control system can be applied to the circuit-switched mobile station, without having to add any circuit-switching special features to the control system, or packet-switching features to the mobile station.

In this way, it is possible to apply call related functions provided by the call control system, which is arranged to provide such functions to packet switched communications, to circuit switched communications as well. It is therefore not necessary to provide two parallel control systems, one for circuit switched communications and one for packet switched communications, where these two parallel call control systems would provide overlapping functionalities. Much rather, in accordance with the present invention, it is possible to make optimum use of a (central) call control system.

Preferably, the access control system or access control server for handling call control related signalling associated with circuit switched communications by itself generates and provides predetermined call related functions for such circuit switched communications. In other words, certain call related functions are provided by the call control system and others by the circuit switched access control system. Preferably, the call related functions provided by the circuit switched access control system are access specific functions associated with circuit switched communications.

The present invention will become more readily understandable from the following detailed description of preferred embodiments, which are only given as illustrative examples and are not intended to restrict the scope of the invention, where the description makes reference to the accompanying figures, in which
- Fig. 1: shows a schematic o of a call control network arranged in accordance with the present invention,
- Fig. 2: shows the schematic structure of a connectivity layer and a control layer,
- Fig. 3: shows a detailed embodiment of the present invention,
- Fig. 4: shows an example of protocol layering,
- Fig. 5: shows an example of signalling performed when a circuit switched mobile station registers as a home subscriber,
- Fig. 6: shows an example of signalling performed when a circuit switched mobile station registers as a visiting subscriber,
- Fig. 7: shows an example of signalling performed in connection with a mobile originating call from a circuit switched mobile station,
- Fig. 8: shows an example of signalling performed in connection with a mobile terminating call to a circuit switched home mobile station, and
- Fig. 9: shows an example of signalling performed in connection with a mobile terminating call to a circuit switched visiting mobile station.

### [Detailed description of the present invention]

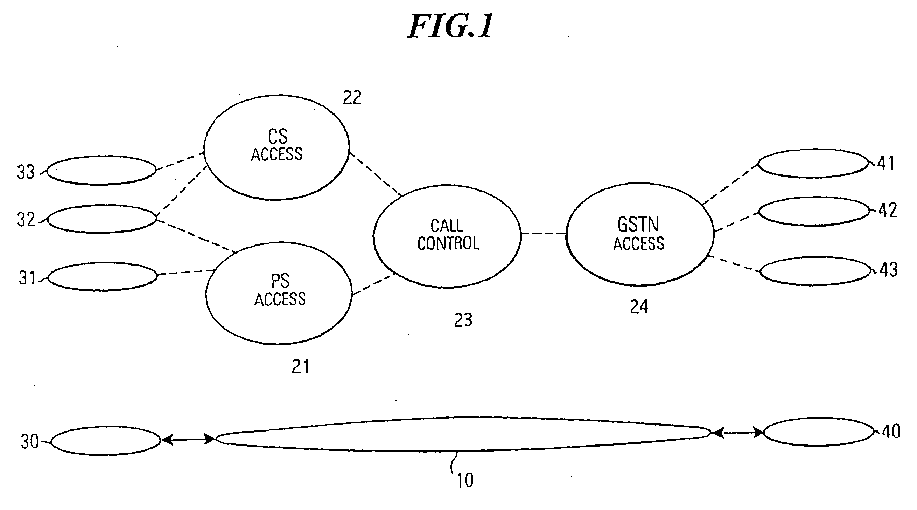

Fig. 1 shows a schematic overview of a call control network according to the present invention. A mobile communication network 30 and a general switched telephone network GSTN 40 are shown, connected by a connectivity layer 10. Preferably, the connectivity layer 10 is IP based.

The mobile communication network 30 comprises a plurality of access networks 31, 32 and 33, where access network 31 is packet switched, access network 33 is circuit switched, and access network 32 supports both packet switching and circuit switching. This is naturally only an example, and more or less access networks could be provided. The call control layer comprises a circuit switched (CS) access system 22 and a packet switched (PS) access system 21, where the packet switched access control system 21 handles control related signalling (e.g. mobility and connectivity at the bearer level) associated with the packet switched access networks, and the circuit switched access control system 22 handles control related signalling associated with circuit switched communications. It may be noted that dotted lines in Fig. 1 indicate signalling, whereas solid lines indicate content or payload.

The call control network furthermore comprises a call control system 23 for providing call related functions for packet switched communication. Fig. 1 additionally shows a GSTN access control system 24 that handles call control related signalling associated with a plurality of GSTN access networks 41-43 that belong to GSTN 40.

In accordance with the present invention, the circuit switching access control system 22 communicates with the call control system (sometimes also referred to as call control domain) 23 on the basis of a call control protocol for controlling packet switched communication, where said protocol is terminated by the circuit switching access control system 22. The call control system 23 uses the same protocol to interact with the packet switching access control system 21. Therefore, by arranging the communication between the CS access control system 22 and the call control system 23 in this way, the CS access control system 22 can "act" like a PS access control system towards the call control system 23. In other words, from the point of view of the call control system 23, only packet switched communications are dealt with, such that the call control system does not need any circuit switching specific control functions. All necessary circuit switching specific functions are implemented in the CS access control system 22, which on the other hand, however, preferably does not duplicate any functions provided by the call control system 23. In other words, a highly efficient and simplified structure is presented.

The CS access control system 22 communicates with the circuit switching access network 33 with the help of a second call control protocol designed for control of circuit switched communications, where this second call control protocol is also terminated by the CS access control system 22. The CS access control system 22 interworks between the circuit switching access network 33 and the call control system 23, in such a way that at least a part of the call related functions provided by the call control system 23 can also be applied to circuit switched communications to and from the circuit switching access network 33.

It may be noted that the term "interworking" can consist in a simple repackaging or reframing of information sent in accordance with one protocol into protocol data units (PDU) of the other protocol. The interworking can also be more complicated and comprise a manipulation of such information before sending it from the access network 33 to the call control system 23 or vice versa. It should be noted that the precise details of such manipulation are outside the scope of the present invention, as such manipulation will depend on the standard or standards used in the access network 33 and the call control system 23. In this way, such manipulation will be implemented as desired for a specific application.

As a consequence of the above-described arrangement, the access network 33 is presented with a complete call control functionality for circuit switched connections, even though in reality at least some of these functions are provided by the call control system 23 that is arranged for providing call related functions to packet switched communications. The call control system 23 in turn is not aware that it is providing such functions to circuit switched communications, as the CS access control system 22 communicates like a packet switching access control system.

Besides providing the function of interworking between the circuit switching access network 33 and the call control system 23, the CS access control system 22 will preferably also itself generate and provide predetermined call related functions that are specific for the circuit switched communications. Namely, any necessary or desired call related functions not supported by the call control protocol used between CS access control system 22 and the call control system 23 will be provided by the CS access control system 22 itself. These additional functions will typically be access specific functions, especially radio resource management and mobility handling. Examples of radio resource specific features that can be implemented by the CS access control system 22 are the handling of high-speed circuit-switched data (HCSD) or an enhanced multi-level precedence and preemption service. Examples of mobility management specific features are regional services or the support of localized service area.

In accordance with the present invention, at least one interworking function is provided in said CS access control system 22 that is arranged to generate a network identifier usable in the call control system 23, for a given circuit switched mobile station, where the network identifier is generated on the basis of a call destination identifier of the given mobile station.

A call destination identifier is any suitable identifier associated with a given mobile terminal and/or subscriber_ that is used by other terminals in the same or other communication networks for establishing a communication with the given mobile terminal and/or subscriber. This call destination identifier can e.g. be the telephone number or E.164 number of the given mobile station. Naturally, the call destination identifier can be of other nature than a number, and can comprise other characters than digits. Also, if the mobile station is associated with more than one call destination identifier, than any one of these can be used.

The interworking function is arranged to obtain a call destination identifier of an accessing mobile station in any desired or suitable way. For example, if the accessing mobile station directly provides the call destination identifier in its signalling to the CS access system 23, e.g. as a calling party number in a registration request, then the call destination identifier is straight forwardly available. It is also possible that the interworking function determines a call destination identifier from some other information in the signalling from the accessing mobile terminal, e.g. from the IMSI (International Mobile Subscriber Identity) by looking up a corresponding data base that maps the IMSI onto call destination identifiers, or that the interworking function directly requests a call identifier from the accessing mobile station.

The syntax or structure of the network identifier is chosen in accordance with requirements or capabilities of the call control system 23. For example, if the call control system is IP based, then the syntax of the network identifiers can be chosen according to RfC 2396, i.e. the network identifiers can be URIs. Naturally, this is only an example, and the network identifiers can also have some other suitable syntax.

The process of generating a network identifier on the basis of a call destination identifier can e.g. comprise simply including the call destination identifier in the network identifier. As an example, the call destination identifier can be used as one part of the network identifier, and some additional fixed or variable element as a supplementary part, in order to form a network identifier.

Preferably, the supplementary part is a domain name associated with the mobile communication network 30 in which the call control system 23 is implemented. Equally, if the mobile terminal for which a network identifier is to be generated, is a roaming mobile that subscribes to a different network than network 30, a domain name associated with the home network of the visiting mobile station can be used as the supplementary part.

If the call destination of the accessing mobile terminal e.g. is the number 1234567, and the domain associated with network 30 is for example networkl.net, then the network identifier could be formed as 1234567@networkl.net. It is also possible that the call destination identifier is included in inverted form, e.g. 7654321@network1.net. Naturally these are only examples, and instead of using the symbol "@" for separating the two parts, any other suitable delimiting symbol could be used. Also, although the examples only use two parts, one from the call destination of the accessing circuit-switched mobile station and one associated with the network, further parts could be included as is suitable or desirable.

In the above examples, the call destination identifier was included in the network identifier, either directly or inversely. However, it is also possible that the call destination identifier is deconstructed into constituent parts, e.g. a E.164 number into the constituent digits, and then all or some of these constituent parts are included in the network identifier. Again using 1234567 as an example number, this could be deconstructed into 1, 2, 3, 4, 5, 6 and 7, and the network identifier could then be 1.2.3.4.5.6.7@network1.net. The constituent parts could also be defined differently, e.g. groups of characters in the call destination identifier, such as 12, 34, 56, and 7 in the above example.

Preferably, the interworking function comprising the procedure for generating a packet switching network identifier on the basis of a call destination identifier of an accessing circuit switched mobile station, is an interworking function for handling registration requests from circuit switched mobile stations. An example of such registration requests is the "Location Update" signal known from GSM. In other words, the CS access control system 22 has an interworking function that is arranged to receive registration requests conforming to the call control protocol for circuit switched mobile stations, and to generate registration requests conforming to the call control protocol for packet switching in response thereto, where said registration requests conforming to the packet switching call control protocol contain a network identifier generated for the requesting mobile station as explained above. The registration requests conforming to the packet switching call control protocol are then sent to the call control system 23, where they are processed accordingly.

In the situation, in which the call control protocol for circuit switched connections provides a registration request timer that indicates a repetition period for sending registration requests, and the call control protocol for circuit switched connections provides a parameter that indicates how long a network identifier is valid, where this parameter is contained in registration requests sent to the call control system 23, the interworking function in CS access system 22 for handling registration requests is preferably arranged to calculate said parameter on the basis of said repetition period. For example, the parameter can be set equal to the value of the timer.

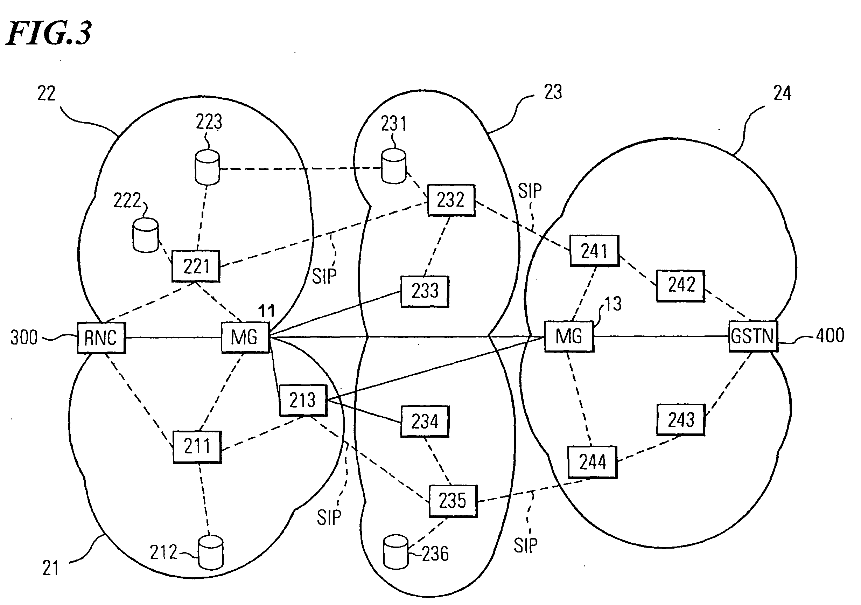

Now a more detailed example of the architecture shall be described in connection with Fig. 3. The same reference numerals as in Figs. 1 and 2 refer to the same or equivalent features in Fig.3. Solid lines again refer to content or payload, while dotted lines refer to signalling.

Reference numeral 300 refers e.g. to a radio network controller (RNC) of a UMTS system or a base station controller (BSC) of a GSM system. Media gateways 11 and 13 are provided, for converting user information between the RNC 300 and a general switched telephone network (GSTN) 400.

In the example of Fig. 3, it will be assumed that the packet switched communications conform to GPRS (General Packet Radio Service), which is well known and therefore needs not to be described in detail. The circuit switched communications are assumed to conform to standard GSM. Naturally, this is only an example, and the circuit-switched and packet-switched communications can also adhere to other standards.

The access control system (or access control domain) for handling call control related signalling associated with packet switched communications comprises an SGSN server (serving GPRS support node server) 211, a home location register (HLR) 212 and a GGSN (Gateway GPRS support node) 213. It may be noted that in the present example the SGSN is split into the SGSN server performing all call control functionality and a media gateway for payload transmission. Naturally, the invention is not restricted to such a configuration, as any suitable or desirable configuration may be chosen. In other words, the SGSN server and the associated media gateway can also be unified. The SGSN server 211 controls packet switched communications of the media gateway 11, where the SGSN server 211 communicates with the MG 11 via a connection in accordance with e.g. the ITU-T standard H.248. The HLR 212 stores subscriber related data that allows the SGSN server to among other things perform mobility handling of GPRS subscribers.

The access control system 22 for handling call control related signalling associated with circuit switched communications comprises an access control server 221, which will also be referred to as a radio access network gateway or radio access network media gateway controller (RAN MGC). The RAN MGC 221 comprises a visitor location register (VLR), and the CS access control system 22 also comprises an HLR 223. The VLR 222 and HLR 223 correspond to the registers of equal name well known from GSM. The RAN MGC controls communications via the media gateway 11, e.g. also by signalling to the MG 11 with the help of H.248. The media gateway or MG 11 can also be referred to as a radio access network media gateway or RAN MG. In the example, the RAN MGC 221 and the RAN MG 11 are shown as split entities. This is only an example, and the RAN MGC and the RAB MG can also be unified into a single entity.

The call control system or call control domain 23 comprises call state control functions (CSCF) 232 and 235, media resource functions (MRF) 233 and 234, user mobility system/home subscriber systems (UMS/HSS) 231 and 236, which among other things comprise a database for authentication, authorization, accounting. It may be noted that in the example of Fig. 3, the call control system 23 is a multimedia call control domain, which means that the media resource functions 233, 234 can process the media streams of calls, in order to provide conference calls to subscribers.

The GSTN access control system 24 comprises GSTN media gateway controllers 241, 244 for controlling media gateway 13, and signalling gateways (SG) 242, 243 for communicating signalling to the GSTN 400.

As can be seen, a common call control system or call control domain is provided for both packet switched based multimedia (GPRS) terminals and circuit switched terminals, which communicate with the call control network via the radio network controller 300. It may be noted that the described call control architecture is naturally not only suitable for terminals that are fully circuit switched or fully packet switched, but can also be applied for such terminals that can employ both circuit switching and packet switching. There are e.g. also terminals that employ circuit switching for voice communications and packet switching for multimedia communications.

The multimedia terminals connect to the call control domain 23 via the GPRS access control system 21, where the GPRS access control system 21 forwards the call control signalling from the terminals transparently to the call control domain 23. The communication between the user equipment and the CSCF 235 occurs on the basis of the session initiation protocol (SIP), which is e.g. described in IETF RfC No. 2543, or on the basis of any other suitable IP based protocol. The CSCF 235 can therefore be considered as being a SIP server or SIP proxy.

The circuit switched terminals connect to the call control domain 23 via the CS access control system 22. The RAN MGC terminates the CS call control signalling protocols and converts them into an IP based call control protocol (e.g. SIP). For example, the communication between the RNC 300 and the RAN MGC 221 can be conducted in accordance with BSSMAP/RANAP (Base Station System Application Part/Radio Access Network Application Part).

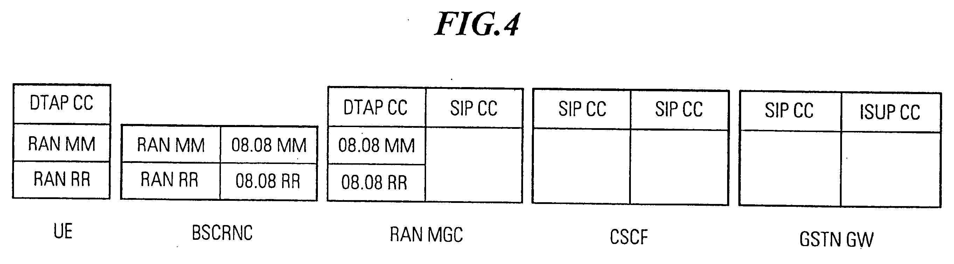

Fig. 4 shows an example of a protocol structure that can be used in the context of the present invention. As can be seen, the mobility management layer and radio resource layer are terminated at the user equipment (UE) and the radio access network gateway (RAN GW) or RAN MGC, where the BSC/RNC (Base Station Controller/Radio Network Controller) can translate these mobility management and radio resource protocols. Also, the protocol above the MM/RR layers used by the user equipment (e.g. direct transfer application protocol DTAP) is terminated at the RAN GW. The RAN GW translates the DTAP call control into SIP call control.

As already shown in Fig. 3, the call control protocol between the CSCF 232 and the GSTN MGC 241 is also SIP, which is indicated in Fig. 4, and finally the GSTN gateway translates the SIP call control into ISUP call control (ISDN user part), for example.

Due to the above arrangement, the RAN MGC communicates in BSSMAP/RANAP to the RNC/BSC, it communicates in DTAP to the UE, and in SIP to the CSCF. It therefore appears like a MSC (mobile switching centre) towards the RNC/BSC and the UE. On the other hand, it appears like a GGSN/UE towards the CSCF.

The implementation of functions in the RAN MGC is preferably such that RR/MM layer dependent features are implemented in the RAN MGC, whereas RR/MM layer independent features (which are supported by SIP) are implemented in the CSCF. RR/MM dependent features, i.e. features specific to radio resource management and mobility handling have been mentioned above, and examples of RR/MM independent features are session/connection monitoring, billing, intelligent network services (such as call waiting, call forwarding, call interception, etc.) and general network application functions.

By virtue of this arrangement, the circuit switched terminal or UE will see a mobile switching centre (MSC) as it is well known for present GSM systems, and the multimedia call control domain 23 will see a GGSN and UE, as if the circuit switched user equipment were a packet switching multimedia terminal accessing the call control domain via a packet switching access control system.

The detailed implementation of the RAN MGC not only depends on the specific standards employed in the access networks and call control system, but also on desired support functionalities. Such desired functionalities can be chosen and implemented as desired or required for specific applications. In the following, a number of simple examples shall be given for the purpose of illustration.

In a first example, the system will be arranged such that all multimedia communications are packet switched, and the circuit switched support only extends to voice services. An example of such a situation would be a network operator who only has GPRS (packet switched) home subscribers, but wishes to at least provide voice service for roaming subscribers that use circuit switching equipment. For voice services the (outband) call control signalling from the mobile station is terminated in the RAN MGC. The RAN MGC converts the DTAP control signalling to SIP control signalling towards the CSCF. The CSCF processes the call signalling. The calling party number is carried in the DTAP control signalling. The payload may be converted to the RTP (Real Time Protocol) format in the RAN MG, depending on the format supported by the RNC.

With respect to service subscription handling, i.e. the providing of supplementary services such as intelligent network services, which reside in the multimedia call control domain, a number of options are available for the specific handling of associated service interrogation requests. For example, upon interrogation from the mobile station, the RAN MGC may interrogate the UMS/HSS server in the multimedia call control domain. Or, upon interrogation from the mobile station, the RAN MGC may interrogate the HLR. The HLR interrogates the UMS/HSS server and returns the result to the RAN MGC (note the signalling connection between HLR 223 and UMS/HSS 231 in Fig. 3). When new services are administered, both the HLR and the UMS/HSS server are updated.

For mobility handling, the RAN MGC allocates an appropriate packet switching address, such as an IP address for the circuit switched subscriber, where the CSCF keeps track of this IP address with the help of the user mobility system (UMS) database, such that the circuit switched subscriber can be treated like a packet switched subscriber. The CSCF only needs to be updated when the IP address at which the subscriber can be found is changed. On the other hand, the RAN MGC keeps track of the location area of a subscriber, i.e. the subscriber's actual location in the access network.

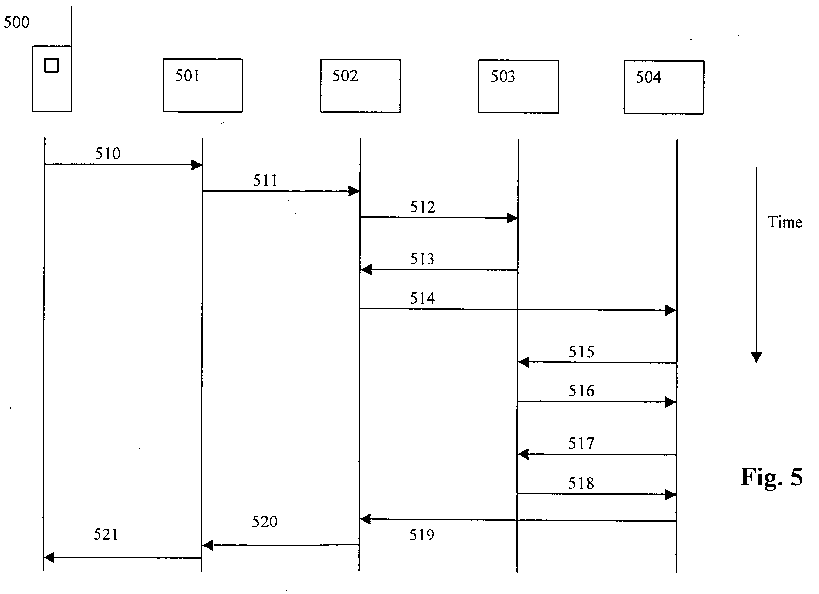

Now a number of examples of signalling in a network having the architecture of Figures 1 and 3 will be described with reference to Figures 5 to 9. These examples show situations in which a network identifier is generated on the basis of a call destination identifier of a mobile terminal, and situations in which such an identifier is used.

In Fig. 5 reference numeral No. 500 refers to a mobile station that performs circuit switched communications. Reference numeral 501 refers to an entity in the access control system for handling circuit switched call control, which implements the interworking operations of the present invention, and can e.g. be the RAN MGC 221 shown in Fig. 3. As shall be explained further on, this entity 501 comprises an interworking function that has a procedure for generating a network identifier on the basis of a call destination identifier of the mobile station 500. Reference numerals 502 and 504 relate to call state control functions (CSCF), such as the CSCF 232, 235 shown in Fig. 3, where in the example of Fig. 5 element 502 acts as a so-called interrogating CSCF (I-CSCF) and element 504 acts as a so-called serving CSCF (S-CSCF). The concept of calling or serving CSCFs is known from the third generation partnership project (3GPP), and is e.g. explained in 3GPP TS 23.228 (IP Multimedia (IM) Subsystem - Stage 2), such that a further explanation is not necessary here. Finally, element 503 relates to a home subscriber system HSS, as e.g. shown as elements 231, 236 in Fig. 3.

In Fig. 5, arrows 510 to 521 represent signalling messages exchanged between the various shown elements. As indicated by the time arrow on the right side of the figure, consecutive arrow numbers relate to consecutive points in time.

Initially, the mobile station accesses the RAN MGC 501 via an appropriate radio access network (RAN) with a message 510. This message 510 will conform to the appropriate control protocol for circuit switched communication, e.g.

RANAP/BSSAP. Message 510 can e.g. be a registration request transmitted by the mobile station upon initial turn-on or sent out periodically as a location update from the mobile station. Namely, message 510 can e.g. be a conventional location update request as it is known from the GSM system.

In connection with the example of Fig. 5, it will be assumed that the mobile station is a home subscriber. The RAN MGC determines that the message comes from a circuit switched subscriber in the home network. This can e.g. be done on the basis of any suitable information contained in the message 510, e.g. the IMSI (international mobile subscriber identity). Then the RAN MGC generates an appropriate network identifier suitable for the packet switching based call control system 23 of Fig. 3. For example, the RAN MGC first determines the calling party identifier or calling party number (which can be a E.164 number) of the mobile station 500 sending the location update 510. This can be done in any appropriate fashion. If the calling party number is already contained in the message 510, then it is readily available, and otherwise it can be determined from other available information, such as the IMSI. Namely, the RAN MGC can map the IMSI into a calling party number by looking up an appropriate data base. The RAN MGC can then generate a URI on the basis of this calling party number. For example, it can construct a URI by using the calling party number as one part, introducing an appropriate separation symbol such as "@" and then including an appropriate domain identifier for the home network, such that the URI could take the following form: URI = calling_party_number@home_network.net.

In addition, the RAN MGC can also allocate an IP (internet protocol) address for the user, e.g. from its own pool of addresses.

Then, the URI generated for the mobile station 500, a URI identifying the RAN MGC itself, and possibly the above-mentioned additional IP address are included in a registration request 511 sent to the I-CSCF 502. The registration request 511 conforms to the call control protocol handling packet switched communications. For example, it can be a SIP registration request. Such a SIP registration request can e.g. have the following form:
REGISTER sip:registrar.home_network.net SIP/2.0
Via: SIP/2.0/UDP ran_mgc.home_network.net
Via: SIP/2.0/UDP [user1_ip_address]
From: user1@home network.net
To: user1@home network.net
Contact: <sip:user1@home_network.net@ran_mgc@home_network.net>
...
Expires: time_in_seconds
...

As can be seen in the above example, the SIP registration makes use of the EXPIRE function provided by SIP. This EXPIRE function indicates how long a network identifier, i.e. a URI is valid. Preferably, the EXPIRES timer is set in accordance with the frequency of the periodic location updates sent by mobile station 500 to the RAN MGC 501. If the RAN MGC receives subsequent location updates prior to the expiration of the set registration time (referred to as "time_in_seconds" above), then such location updates can be discarded by the RAN MGC. If the S-CSCF 504 in subsequent signalling mandates a SIP registration EXPIRES timer that is lower than the periodic location update, then the RAN MGC can be implemented to insert SIP registration messages itself with an appropriate frequency.

With message 512, the I-CSCF 502 requests information from the HSS 503 as an input for the operation of selecting an S-CSCF. Message 513 represents a corresponding response. It may be noted that the HSS 503 is preferably arranged to determine that the URI identifies a home circuit switched subscriber and can return an appropriate indication of this fact to the I-CSCF 502. This determination can be done in any appropriate and suitable way, preferably on the basis of specific predetermined identifiers being present or not present in the URI. As an example, it is possible that the URI will contain a specific marker, such as the string "visit" in order to identify visiting subscribers, such that the lack of such a marker identifies a home subscriber. Naturally, home subscribers could also be identified by the inclusion of an explicit appropriate marker.

As a next step, the I-CSCF 502 selects an S-CSCF (possibly taking the indication from the HSS 503 regarding the home circuit switched subscriber into consideration) and forwards a request 514 to the selected S-CSCF 504. This request 514 is basically identical to the request 511 and contains the URI identifying the home circuit switched subscriber and the URI associated with the RAN MGC.

In response thereto, the S-CSCF 504 requests the subscriber profile from the HSS 503 with a message 515. The HSS 503 returns the profile for this home subscriber in a message 516. This could be a default profile for circuit switched subscribers, a default profile for circuit switched home subscribers, or a specific profile for this specific subscriber. With signalling message 517 the S-CSCF informs the HSS 503 that it will be handling this subscriber, where the HSS 503 stores this indication. This fact is acknowledged with an appropriate acknowledgement 518 sent from the HSS 503 to the S-CSCF 504.

Then, the S-CSCF sends an acknowledgement 519 for the previous registration 514. In turn, the I-CSCF sends an acknowledgement 520 associated with the registration 511 and finally the RAN MGC 501 sends an acknowledgement 521 associated with the location update 510.

As can be seen from the above described example, the interworking function in the RAN MGC terminates the circuit switching call control protocol (e.g. RANAP/BSSAP) towards the mobile station 500, and terminates the packet switching call control protocol (e.g. SIP) towards the network holding the I-CSCF 502, such that the mobile station 500 "sees" a call control system for circuit switched communications, while the packet switching control system "sees" a mobile station that is controllable via SIP.

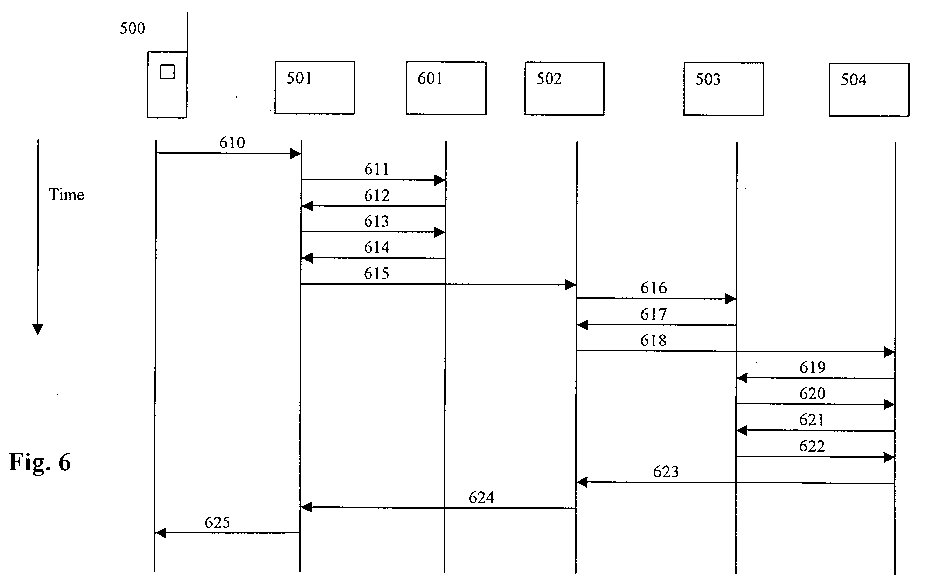

In Fig. 5 it was assumed that the mobile terminal 500 was a home subscriber. With reference to Fig. 6, an example will be described in which the mobile station 500 is assumed to be a visiting subscriber. Identical or similar elements as described with respect to Fig. 5 have the same reference numeral and shall not be described again.

Reference numeral 610 refers to a location update message sent by the mobile station 500 via a radio access network to the RAN MGC 501. The RAN MGC 501 determines that the circuit switched subscriber is from another network, e.g. from the IMSI, and forwards the location update to the home location register (HLR) 601 in the home network of the subscriber sending the location update, with message 611. In response thereto, the HLR 601 downloads subscriber data to the RAN MGC 501 via message 612. Mores specifically, this information is downloaded into the visitor location register (VLR) associated with the RAN MGC 501, as e.g. shown by reference numeral 222 in Fig. 3.

Message 613 and 614 are associated acknowledgement messages.

Then the RAN MGC 501 (more specifically the interworking function in the RAN MGC 501 that is capable of generating a network identifier) generates an appropriate network identifier, e.g. a URI that preferably contains an indication that the associated subscriber is a visiting subscriber. The procedure is similar to the one described in connection with Fig. 5, namely the RAN MGC 501 determines the calling party identifier or number (e.g. by mapping the IMSI) and then generates a URI on the basis thereof. Examples are
URI = calling_party_number@home_network.net or
URI = visitor_ind_calling_party_number@home_network.net

The element "visitor_ind" stands for a suitable marking that indicates a visiting subscriber. In this way it is immediately visible that the associated subscriber is a visiting subscriber at the network identified by the domain name "home_network.net". In other words, "home_network.net" does not stand for the home network of the visiting subscriber, but much rather for the visited network, i.e. the network that the visiting subscriber is accessing.

In summary, the URI should contain an element derived from the calling party identifier or number (such as the calling party number itself, or at least deconstructed parts thereof), and a domain name or domain indication associated with the network being accessed.

Similar to the example of Fig. 5, the RAN MGC 501 can have an option to additionally allocate an IP address for the accessing subscriber, e.g. from its own pool of addresses.

The generated URI, a URI indicating the RAN MGC 501 itself, and possibly the above-mentioned IP address are then included in registration request 615 that conforms to the packet switching call control protocol, e.g. SIP. In other words, the message 615 could be an appropriate SIP registration request to the I-CSCF 502, e.g.:
REGISTER sip:registrar.home_network.net SIP/2.0
Via: SIP/2.0/UDP ran_mgc.home_network.net
Via: SIP/2.0/UDP [user2_ip_address]
From: user2@visited_network.net
To: user2@visited_network.net
Contact:<sip:user2@visited_network.net@ran_mgc@home_network.net>
...
Expires: time_in_seconds
...

Similar to the example of Fig. 5, if the circuit switching call control protocol provides a registration request, and the packet switching call protocol provides a parameter that indicates how long a network identifier is valid, such as a EXPIRE function of SIP, then this latter parameter can be set in accordance with the frequency of the periodic circuit switch registrations. Again, if location updates are received prior to the expiration of the registration timer, then they can be discarded by the RAN MGC 501. If the S-CSCF 504 mandates a SIP registration EXPIRES timer lower then the periodic location update, then the RAN MGC 501 can appropriately insert SIP registration messages itself.

With message 616, the I-CSCF 502 requests information from HSS 503, as an input into the procedure for selecting a S-CSCF. The message 616 contains the URI generated for the visiting subscriber. The HSS 503 is preferably arranged in such a way that it can recognise that the associated subscriber is a visiting circuit switched subscriber, namely by appropriately analysing the received URI, and can return an indication of this fact to the I-CSCF 502 via message 616.

Then the I-CSCF 502 selects an appropriate S-CSCF (possibly taking the indication from the HSS 503 into consideration), and forwards the registration request to the selected S-CSCF 504 with a message 618. This registration request 618 is basically identical to the registration request 615. The S-CSCF 504 requests a subscriber profile from the HSS 503 via message 619, by communicating the URI of the circuit switched visitor, and the HSS 503 returns the profile of the visiting subscriber via message 620. This could be a default profile for circuit switched subscribers, or a default profile for circuit switched visiting subscribers.

The S-CSCF 504 then sends a message 621 to the HSS 503 indicating that it is handling this subscriber, and the HSS 503 performs a corresponding storage operation and sends a confirmation 622 to the S-CSCF 504.

Then the S-CSCF 504 sends a confirmation 623 associated with the registration request 618, to the I-CSCF 502, whereupon I-CSCF 502 acknowledges the request for registration 615 with an acknowledgement 624 to the RAN MGC 501. Finally, the RAN MGC sends an appropriate acknowledgement 625 associated with the initial location update 610.

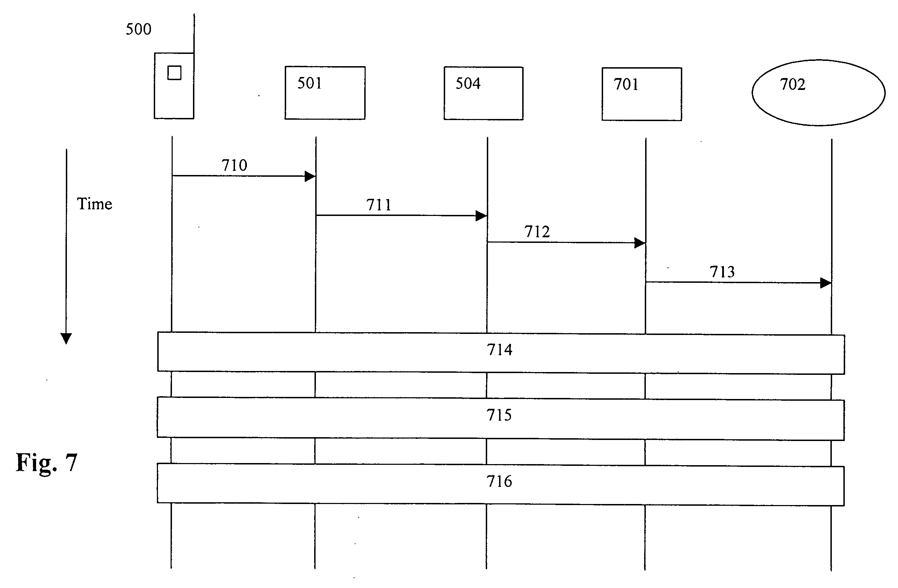

Now, with reference to Fig. 7, an example for mobile originating calls from a circuit switched subscriber shall be explained. Identical or similar elements as described with respect to Fig. 5 or 6 have the same reference numeral and shall not be described again. In the example of Fig. 7 the mobile station 500 can be assumed to be either a home subscriber or a visiting subscriber, as this does not make any difference with respect to the call establishment procedure.

Initially, the mobile station 500 sends a call set-up request 710 to the RAN MGC 501. This call set-up request conforms to the circuit switching standard that the mobile station 500 operates in accordance with, and includes a called party identifier (such as a called party number) and preferably also includes a bearer capability. The bearer capability indicates the call (or bearer) type, such as voice-only, voice and video, etc..

In response to receiving the set-up request 710, the RAN MGC 501 provides a network identifier for the circuit switched mobile station making the request. It is possible that the RAN MGC generates a network identifier (such as a URI) as described above in connection with Figs. 5 and 6, or it is possible that the RAN MGC retrieves an already generated network identifier, e.g. a network identifier that was generated in response to a location update as explained in connection with Figs. 5 and 6, which was stored in an appropriate data base, such that it can e.g. be retrieved on the basis of the IMSI sent by the mobile station making the call set-up request 710.

In general terms, the RAN MGC has an interworking function that comprises a call set-up procedure for receiving a call set-up request conforming to the circuit switched call control protocol (e.g. RANAP/BSSAP) from a call originating mobile station (500) accessing via the circuit switching access control system, for providing an appropriate network identifier (e.g. an URI) for the call originating mobile station, for including the network identifier (URI) in a call set-up request conforming to the call control protocol (e.g. SIP) used by the call control system 23.

Moreover, the interworking function in the RAN MGC 501 appropriately places the called party identifier and the bearer capability provided by request 710 into a request 711 that is sent in accordance with the packet switched call control protocol to the S-CSCF 504. For example, if the packet switching call control protocol is SIP, then an appropriate session set-up request would use the INVITE function provided by SIP. The bearer capability (speech) would be mapped into the SDP (Session Description Protocol, IETF RfC 2327) format (audio). It may be noted that the S-CSCF was preferably determined during registration (see Figs. 5 and 6), and it is possible that the message 711 is sent to the S-CSCF via an I-CSCF, which is not shown in Fig. 7 for simplicity. Also, the request 711 should contain the network identifier for the circuit switched mobile terminal and for the RAN MGC. Using SIP as an example, this message could look like:
INVITE <called_party_identifier> SIP/2.0
Via: SIP/2.0/UDP ran_mgc.home_network.net
Via: SIP/2.0/UDP [user1_ip_address]
From: used1@home_network.net
To: <called_party_identfier>
Contact: <sip:user1@home_network.net@ran_mgc@home_network.net>

On the basis of the called party identifier, the S-CSCF 504 determines an appropriate media gateway control function (MGCF) 701 that belongs to the GSTN access control, e.g. shown as 24 in Fig. 3. The MGCF 710 can map the call set-up request (e.g. the SIP INVITE message) into an appropriate set-up request for the GSTN, e.g. a ISDN user part (ISUP) IAM (Initial Address Message, ITU-T Q.763) message, as also indicated on the right-hand side of Fig. 4. This is then sent to the GSTN 702, an example of which is shown as 400 in Fig. 3. The calling party number is derived from the calling party's URI, and the SDP description is mapped into a corresponding bearer capability.

Then bearer establishment 714, alerting 715 and connecting 716 takes place in accordance with the requirements of the involved systems, which is not shown in more detail, as it does not specifically relate to the present invention.

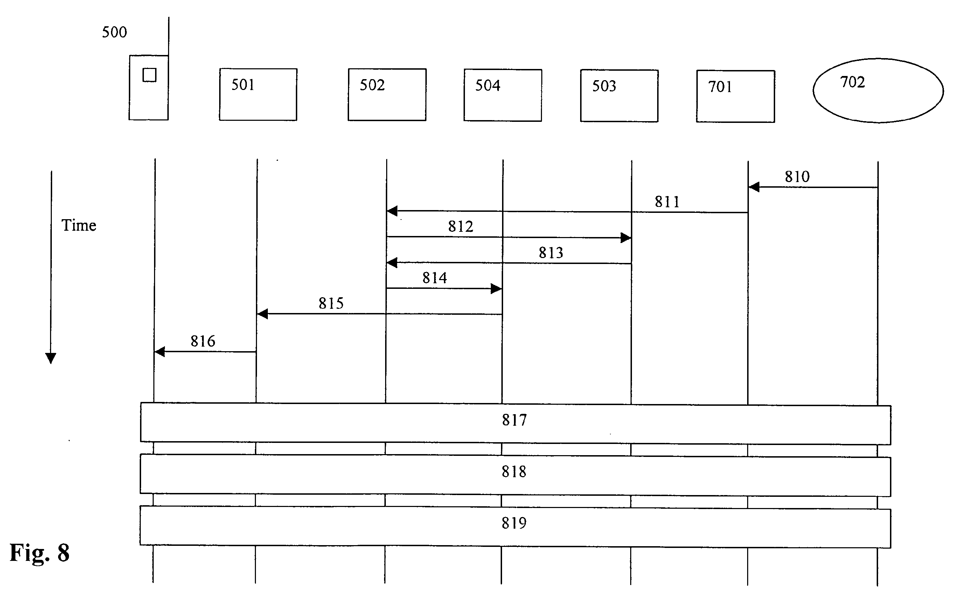

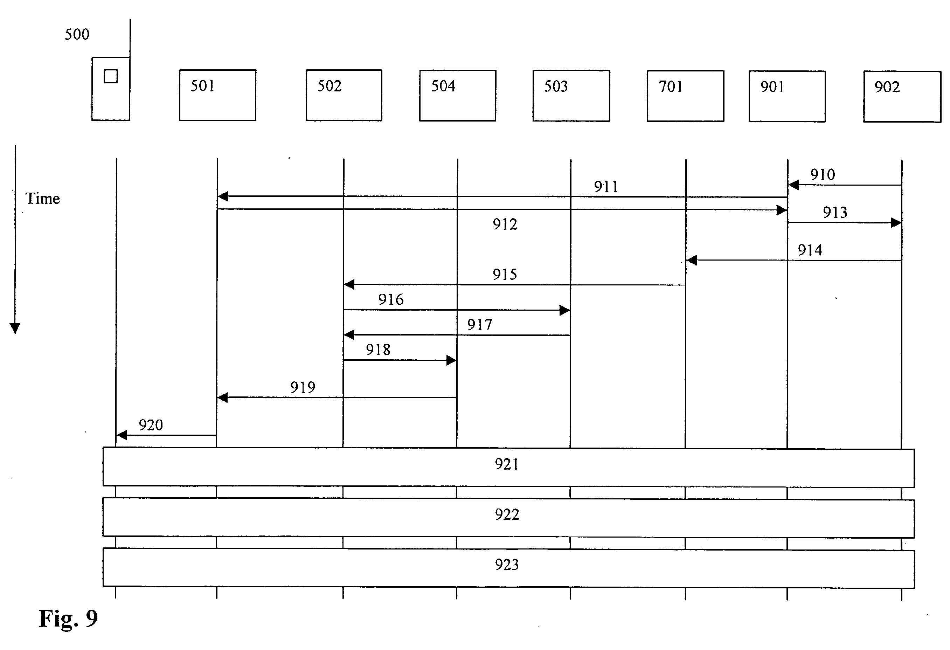

Now, with respect to Figs. 8 and 9, examples of mobile terminating calls shall be described, where Fig. 8 relates to a mobile terminating call for a home subscriber, and Fig. 9 relates to a mobile terminating call for a visiting subscriber. Identical or similar elements as described with respect to Fig. 5 to 7 have the same reference numeral and shall not be described again.

In Fig. 8, a call set-up request 810 is initially sent from the GSTN 702 to the MGCF 701. This call set-up request will have a format conforming to the GSTN, e.g. ISUP. The MGCF 701 can when transform or translate this into an appropriate call control protocol for the packet switched call control system 23 of Fig. 3, e.g. SIP. Namely, the MGCF 701 can e.g. map the IAM message received from the GSTN 702 into a SIP INVITE message. The original message 810 will contain an indication of bearer capability, a called party identifier, and preferably also a calling party identifier or calling party number. The bearer capability is mapped into SDP, and the called party identifier is mapped into a network identifier, e.g. a URI. Namely, the MGCF is capable of looking up an appropriate URI on the basis of the called party identifier, said network identifier having been generated previously as e.g. described in connection with Figs. 5 and 6. On the basis of this network identifier, the MGCF is able to identify an I-CSCF 502 to which it sends the appropriately translated call set-up request 811, e.g. a SIP INVITE message containing the SDP, the calling party number of the subscriber from the GSTN desiring call establishment, and the above-mentioned URI for the called party, i.e. the circuit switched mobile station 500.

The I-CSCF 502 requests information from the HSS 503 as input for the S-CSCF selection, via message 812. The HSS 503 returns the requested information to the I-CSCF 502 in message 813. The I-CSCF 502 then forwards the call set-up request to the S-CSCF 504 in message 814, e.g. as a SIP INVITE message containing the above-mentioned SDP, called party number and the URI of the mobile station, basically identical to message 811.

The S-CSCF 504 then forwards this set-up request to the RAN MGC 501 determined during registration, which in turn maps or translates the message into an appropriate format for the circuit switched mobile terminal 500. For example, the RAN MGC maps the INVITE message into a DTAP SETUP message 816 that is then sent to the mobile station 500. This set-up request 816 contains the appropriately formatted SDP information as a bearer capability, and possibly the calling party number.

Then bearer establishment 817, alerting 818 and connecting 819 are conducted as is appropriate for the system, which is not described in more detail, as it is not relevant for the present invention.

Fig. 9 shows the example of a mobile terminating call directed towards a visiting subscriber. Initially, a GMSC (Gateway MSC) 902 in the home network of the visiting subscriber requests routing information from its HLR 901 via an appropriate message 910. It may be noted that the prior signalling that contacts the home network of the visiting subscriber is not shown for the purpose of simplicity. Then, the HLR 901 contacts the RAN MGC 501 that is currently serving the subscriber in order to obtain a roaming number, see message 911. Message 911 is acknowledged with message 912, and then message 910 is acknowledged with message 913.

Then the GMSC 902 forwards the call set-up request to the MGCF 701 in message 914 using the obtained roaming number for routing. This call set-up message can e.g. be like the IAM message 810 described in connection with Fig. 8. Namely, it contains a bearer capability, a calling party number and the roaming number.

The MGCF 701 then sends an appropriate call set-up request in the format of the packet switched call control protocol (e.g. SIP) to the I-CSCF 502, see message 915. Namely, the MGCF can e.g. map the IAM into a SIP INVITE message, where the bearer capability is again mapped in SDP, and the called party identifier is mapped into a URI, as described above with respect to mobile originating calls. In response to this SIP INVITE message 915, the I-CSCF 502 requests information from HSS 503 as an input to the S-CSCF selection procedure, see message 916. HSS 503 responds with message 917, whereupon the I-CSCF 502 selects a S-CSCF 504 and forwards the call set-up request, e.g. the SIP INVITE message 918 that contains the SDP, the calling party number and the URI of the circuit switched visiting subscriber. The S-CSCF 504 then forwards this message to the RAN MGC 501 determined during registration, see message 919. Finally, the RAN MGC maps this message into the appropriate circuit switched call control format, in order to generate a call set-up request 920 for the mobile terminal 500. For example, the RAN MGC translates the INVITE message into a DTAP SETUP message which also contains the appropriately formatted bearer capability information and possibly the calling party number.

Finally, bearer establishment 921, alerting 922 and connecting 923 are performed as is suitable for the system, which is not shown in more detail, as it is not relevant for the present invention.

Regarding the embodiment of figure 7, in general terms the MGCF is an entity for performing gateway control towards a second communication network (e.g. the GSTN), comprising a call set-up procedure for receiving a call set-up request from the call control system (23), for deriving a calling party identifier for a call originating mobile station from the network identifier (URI) contained in said call set-up request, for including the calling party identifier in a call set-up request conforming to a call control protocol used by said second communication network, and for forwarding the resulting call set-up request to the second communication network.

Regarding the embodiments of figures 8 and 9, in general terms the MGCF furthermore comprises a call set-up procedure for receiving a call set-up request conforming to the call control protocol used by said second communication network, which contains a called party identifier, for providing a network identifier (URI) on the basis of said called party identifier, for including said network identifier (URI) in a call set-up and for forwarding the call set-up request to the call control system (23).

Although the above described signalling examples were described with respect to specific call control protocols for circuit switched communications and specific call control protocols for packet switched communications, namely that the circuit switched mobile operates in accordance with GSM and the call control system is SIP based, these are naturally only examples, and the skilled person will readily be able to implement corresponding procedures with respect to other communication protocols and standards, using the features and commands specified for these other communication protocols and standards.

Although the present invention has been described on the basis of a number of specific examples, these only serve to better illustrate the invention, and are not intended to restrict the scope. Reference numerals in the claims also serve the purpose of better understanding, and are not intended to restrict the scope.

## Claims

1. A call control network for controlling calls in a mobile communication network (30), said mobile communication network comprising at least one circuit switching access network (33) that supports circuit switched communications and at least one packet switching access network (31, 32) that supports packet switched communications, comprising
- a call control system (23) for providing call related functions for packet switched communications, arranged
-- to send and receive call control information in accordance with a first call control protocol (SIP) for packet switched communication, and
-- to identify resources by using network identifiers (URI) of a predetermined syntax,
- a first access control system (21) for handling call control related signalling associated with packet switched communications to and from mobile stations in said mobile communication network (30), and
- a second access control system (22) for handling call control related signalling associated with circuit switched communications to and from mobile stations (500) in said mobile communication network (30), wherein said second access control system (22) is arranged to exchange call control information with said call control system (23) by using said first call control protocol (SIP), where said second access control system (22) terminates said first call control protocol (SIP), and wherein said second access control system (22) is arranged to exchange call control information with said circuit switching access network (33) by using a second call control protocol (RANAP/BSSAP) for circuit switched communication, where said second access control system (22) terminates said second call control protocol (RANAP/BSSAP), and said second access control system (22) having interworking functions, such that at least a part of said call related functions provided by said call control system (23) can also be applied to circuit switched communications, where at least one of said interworking functions comprises a procedure for generating a network identifier (URI) of said predetermined syntax for a mobile station accessing via said second access control system (22), said procedure being arranged to generate said network identifier (URI) on the basis of a call destination identifier of said mobile station.

2. A call control network according to claim 1, **characterized in that** said procedure is arranged to include said call destination identifier in the network identifier (URI) to be generated.

3. A call control network according to claim 1, **characterized in that** said procedure is arranged to deconstruct said call destination identifier into constituent parts, and to include at least some of said constituent parts in the network identifier (URI) to be generated.

4. A call control network according to one of claims 1 to 3, **characterized in that** said call destination identifier is an E.164 number.

5. A call control network according to one of claims 1 to 4, **characterized in that** said procedure is arranged to include in said network identifier (URI) being generated a domain name associated with said mobile communication network (30).

6. A call control network according to one of claims 1 to 5, **characterized in that** said procedure is arranged to include in said network identifier (URI) being generated a domain name associated with a communication network to which the mobile station that is accessing via said second access control system (22) subscribes as a home network.

7. A call control network according to one of claims 1 to 6, **characterized in that** said at least one interworking function is an interworking function for handling registration requests (510, 610) from mobile stations (500) accessing via said second control system (22), said interworking function for handling registration requests (510, 610) being arranged to receive registration requests (510, 610) conforming to said second call control protocol (RANAP/BSSAP) from mobile stations (500), and to generate registration requests (511, 615) conforming to said first call control protocol (SIP) in response thereto, where said registration requests (511, 615) conforming to said first call control protocol (SIP) contain a network identifier (URI) generated for the requesting mobile station (500) and are sent to said call control system (23).

8. A call control network according to claim 7, **characterized in that** said second call control protocol (RANAP/BSSAP) provides a registration request timer that indicates a repetition period for sending registration requests conforming to said second call control protocol (RANAP/BSSAP), said first call control protocol (SIP) provides a parameter (EXPIRE) that indicates how long a network identifier (URI) is valid, where said parameter (EXPIRE) is contained in registration requests conforming to said first call control protocol (SIP), and said interworking function for handling registration requests is arranged to calculate said parameter (EXPIRE) on the basis of said repetition period.

9. A call control network according to one of claims 1 to 8, **characterized in that** at least one of said interworking functions comprises a call set-up procedure for receiving a call set-up request (710) conforming to said second call control protocol (RANAP/BSSAP) from a call originating mobile station (500) accessing via said second access control system (22), for providing a network identifier (URI) of said predetermined syntax for said call originating mobile station (500), for including said network identifier (URI) in a call set-up request (711) conforming to said first call control protocol (SIP), and for forwarding said call set-up request (711) conforming to said first call control protocol (SIP) to said call control system (23).

10. A call control network according to claim 9, **characterized in that** said providing of said network identifier (URI) comprises
- generating said network identifier (URI) on the basis of a call destination identifier of said call originating mobile station, or
- retrieving said network identifier (URI) from a data base on the basis of a call destination identifier of said call originating mobile station.

11. A call control network according to claim 9 or 10, **characterized by** comprising an entity (MGCF; 710) for performing gateway control towards a second communication network (GSTN; 40; 400; 702), said entity comprising a call set-up procedure for receiving said call set-up request (712) conforming to said first call control protocol (SIP) from said call control system (23), for deriving a calling party identifier for said call originating mobile station (500) from the network identifier (URI) of said predetermined syntax contained in said call set-up request conforming to said first call control protocol (SIP), for placing said calling party identifier in a call set-up request (713) conforming to a call control protocol used by said second communication network (GSTN; 40; 400; 702), and for forwarding said call set-up request (713) conforming to a call control protocol used by said second communication network (GSTN; 40; 400; 702) to said second communication network (GSTN; 40; 400; 702).

12. A call control network according to claim 11, **characterized in that** said entity (MGCF; 710) furthermore comprises a call set-up procedure for receiving a call set-up request (810; 910) conforming to the call control protocol used by said second communication network (GSTN; 40; 400; 702) from said second communication network (GSTN; 40; 400; 702), said call set-up request (810; 910) containing a called party identifier, for providing a network identifier (URI) of said predetermined syntax on the basis of said called party identifier, for including said network identifier (URI) in a call set-up request (811; 915) conforming to said first call control protocol (SIP), and for forwarding said call set-up request (811; 915) conforming to said first call control protocol (SIP) to said call control system (23).

13. An access control server (221) for handling call control related signalling associated with circuit switched communications to and from mobile stations in a mobile communication network (30), said mobile communication network (30) comprising at least one circuit switching access network (33) that supports circuit switched communications, wherein said access control server (221) is arranged to be connected to a call control system (23) for providing call related functions for packet switched communications, said call control system (23) being arranged to send and receive call control information in accordance with a first call control protocol (SIP) for packet switched communication and to identify resources by using network identifiers (URI) of a predetermined syntax, and said access control server (221) being arranged to exchange call control information with said call control system (23) by using said first call control protocol (SIP), where said access control server (221) terminates said first call control protocol (SIP), and wherein said access control server (221) is furthermore arranged to be connected to said circuit switching access network (33) and is arranged to exchange call control information with said circuit switching access network (33) by using a second call control protocol (RANAP/BSSAP) for circuit switched communication, where said access control server (221) terminates said second call control protocol (RANAP/BSSAP) and has interworking functions, such that at least a part of said call related functions provided by said call control system (23) can also be applied to circuit switched communications, where at least one of said interworking functions comprises a procedure for generating a network identifier (URI) of said predetermined syntax for a mobile station accessing via said second access control system (22), said procedure being arranged to generate said network identifier (URI) on the basis of a call destination identifier of said mobile station.

14. An access control server (221) according to claim 13, **characterized in that** said procedure is arranged to include said call destination identifier in the network identifier (URI) to be generated.

15. An access control server (221) according to claim 13, **characterized in that** said procedure is arranged to deconstruct said call destination identifier into constituent parts, and to include at least some of said constituent parts in the network identifier (URI) to be generated.

16. An access control server (221) according to one of claims 13 to 15, **characterized in that** said call destination identifier is an E.164 number.

17. An access control server (221) according to one of claims 13 to 16, **characterized in that** said procedure is arranged to include in said network identifier (URI) being generated a domain name associated with said mobile communication network (30).

18. An access control server (221) according to one of claims 13 to 17, **characterized in that** said procedure is arranged to include in said network identifier (URI) being generated a domain name associated with a communication network to which the mobile station that is accessing via said second access control system (22) subscribes as a home network.

19. An access control server (221) according to one of claims 13 to 18, **characterized in that** said at least one interworking function is an interworking function for handling registration requests from mobile stations accessing via said second control system (22), said interworking function for handling registration requests being arranged to receive registration requests conforming to said second call control protocol (RANAP/BSSAP) from mobile stations, and to generate registration requests conforming to said first call control protocol (SIP) in response thereto, where said registration requests conforming to said first call control protocol (SIP) contain a network identifier (URI) generated for the requesting mobile station and are sent to said call control system (23).

20. An access control server (221) according to claim 19, **characterized in that** said second call control protocol (RANAP/BSSAP) provides a registration request timer that indicates a repetition period for sending registration requests conforming to said second call control protocol (RANAP/BSSAP), said first call control protocol (SIP) provides a parameter (EXPIRE) that indicates how long a network identifier (URI) is valid, where said parameter (EXPIRE) is contained in registration requests conforming to said first call control protocol (SIP), and said interworking function for handling registration requests is arranged to calculate said parameter (EXPIRE) on the basis of said repetition period.

21. A call control method for a mobile communication network (30), said mobile communication network (30) comprising at least one circuit switching access network (33) that supports circuit switched communications, comprising
- providing call related functions for packet switched communications in a call control system (23) that is arranged to send and receive call control information in accordance with a first call control protocol (SIP) for packet switched communication, and to identify resources by using network identifiers (URI) of a predetermined syntax,
- handling call control related signalling associated with circuit switched communications to and from mobile stations in said circuit switching access network (33) in an access control system (22),
- exchanging call control information between said access control system (22) and said call control system (23) by using said first call control protocol (SIP), where said access control system (22) terminates said first call control protocol (SIP),
- exchanging call control information between said access control system (22) and said circuit switching access network (33) by using a second call control protocol (RANAP/BSSAP) for circuit switched communications, where said second access control system (22) terminates said second call control protocol (RANAP/BSSAP), and
providing an interworking function in said access control system (22), such that at least a part of said call related functions provided by said call control system (23) can also be applied to circuit switched communications, where said interworking function comprises a procedure for generating a network identifier (URI) of said predetermined syntax for a mobile station accessing via said second access control system (22), said procedure being arranged to generate said network identifier (URI) on the basis of a call destination identifier of said mobile station.
